# EUROPEAN PATENT APPLICATION

(11) **EP 3 388 341 A1**
(43) Date of publication of application: **17.10.2018**
(21) Application number: 17166641.5
(22) Date of filing: 13.04.2017
(51) Int. Cl.: B64D 11/06, B60F 5/02, B64C 3/56, B60N 2/02, B60N 2/30, B60N 2/62

(54) **VEHICLE SEAT**

(71) Applicant: AeroMobil R&D, s. r. o., 82106 Bratislava-mestska cast Podunajske Biskupice (SK)
(72) Inventor: MacAndrew, Kenneth Douglas Alexander, 841 06 Bystrica (SK); Ko i , Stanislav, 91106 Trencin (SK)
(74) Representative: Finnegan Europe LLP

(57) **Abstract**

A seating system for a vehicle, comprises first and second seat portions, each providing upper load-bearing surfaces; the first seat portion including a mounting structure for connection to a vehicle body; and the second seat portion including a mounting structure allowing movement with respect to the first seat portion between first and second positions; wherein in the first position, the second seat portion overlies at least part of the upper load-bearing surface of the first set portion; and in the second position, the first and second seat portions are in a substantially side-by-side arrangement such that the respective upper load-bearing surfaces define a seat support surface.

## Description

The invention relates to a seat for use on a vehicle. The vehicle in question can be a road vehicle, an aircraft, or a convertible vehicle configurable for both road and air use.

Vehicles such as flying cars have certain physical constraints on overall size in view of the need to keep all up weight and wind resistance low. In addition, the crew compartment may have other constraints in view of the need to provide safety structure within the vehicle and accommodate appropriate controls and user seating positions. These constraints can make entry into or exit from the vehicle difficult for a user. Similar problems exist with certain types of racing cars, such as open single seat racing cars. In such cases, difficulty in driver access may be solved by providing removable body parts, and a removable steering wheel. However, such approaches are not convenient or necessarily safe for everyday use by a single operator. In addition, they may not be available where the cockpit is fully enclosed.

The invention aims to address some or all of these problems.

### Summary

Aspects of the invention comprise seating systems, vehicles, and methods of using the vehicles as defined in the claims.

A seating system for a vehicle, comprises first and second seat portions, each providing upper load-bearing surfaces; the first seat portion including a mounting structure for connection to a vehicle body; and the second seat portion including a mounting structure allowing movement with respect to the first seat portion between first and second positions; wherein in the first position, the second seat portion overlies at least part of the upper load-bearing surface of the first set portion; and in the second position, the first and second seat portions are in a substantially side-by-side arrangement such that the respective upper load-bearing surfaces define a seat support surface.

The first seat portion can comprise a first seat pad providing the upper load-bearing surface, and the mounting structure of the first seat portion allows the first seat portion to be mounted on the vehicle body in a substantially fixed relationship.

The second seat portion can comprises a second seat pad providing the upper load-bearing surface, and the mounting structure of the second seat portion comprises rails on which the pad is mounted so as to be slideable relative to the first seat portion between the first and second positions. The rails can be configured to be mounted on the vehicle body. In the second position, the load bearing surface of the second seat portion can be higher than the load bearing surface of the first seat portion. For example, the load bearing surface of the second seat portion can be configured in the second position as a thigh support for a user when seated on the seat support surface.

The seating system can further comprise a seat back portion providing a substantially vertical support surface, and including a mounting structure for connection to a vehicle body. The seat back portion can extend from a rear edge of the first seat portion, and the second seat portion can be substantially aligned with a front edge of the first seat portion when in the second position.

A vehicle, such as a vehicle configurable for both road and air use, the controls being configurable according to the configuration of the vehicle, comprises a body defining a seating position for a user and including controls for operation by a user when seated in the seating position; and a seating system as defined above; wherein the second seat portion is closer to the controls when in the second position than when in the first position.

The seating system and the controls can be positioned such that, when the second seat portion is in the first position, the front edge of the second seat portion and the controls are separated by a space sufficient for a user to stand therebetween.

A method of using the vehicle comprises configuring the first and second seat portions into the first position; seating an operator on the load bearing surface of the second seat portion; moving the second seat portion to the second position; and moving the operator so as to be supported by the seat support surface defined by the first and second seat portions.

Further aspects of the claimed invention will be apparent from the following description.

### Brief Description of the Drawings

Figure 1 shows a schematic side view of a seating system installed in a vehicle in a first position;
Figure 2 shows the corresponding view to Figure 1 in a second position;
Figures 3 and 4 show a flying car configured for flight and road use.

### Detailed Description

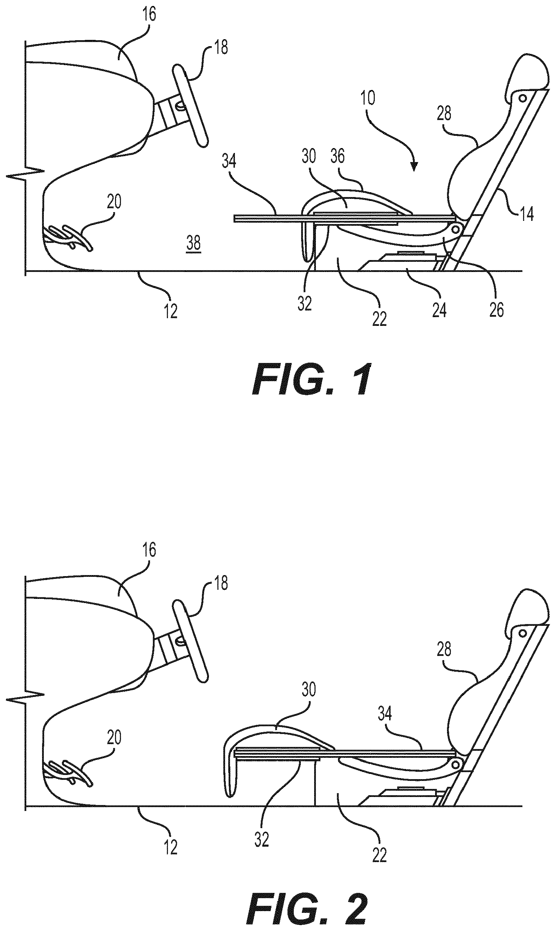

Figures 1 and 2 show a schematic side view of a crew compartment of a flying car (with parts omitted for clarity). The compartment comprises a seat 10, a floor 12, a bulkhead 14, instrument binnacle, 16, a steering wheel/control yoke 18, and a control pedal arrangement 20.

The seat 10 comprises a first seat portion 22 that is connected to the floor 12 and bulkhead by means of mountings 24. The first seat portion 22 includes a cushioned pad 26 providing an upper load-bearing surface. The first seat portion 22 in this case is in a fixed position with respect to the vehicle body (floor 12, bulkhead 14, binnacle 16, etc.). A seat back 28 extends upwardly from the rear edge of the first seat portion 22. The seat back 28 is also fixed to the bulkhead 14.

A second seat portion 30 is mounted by means of sliders 32 mounted on runners 34 extending along the sides of the crew compartment. The second seat portion 30 includes a cushioned pad 36 providing an upper load bearing surface.

In a first position (Figure 1), the second seat portion 30 is positioned towards the rear of the runners 34 so as to lie above the first seat portion 22. when the second seat portion is in this position, the space 38 between the forward edge of the seat 10 and the binnacle 16 is relatively unobstructed and of sufficient size that an operator can stand on the floor 12, and can easily move into or out of the crew compartment.

In a second position (Figure 2), the second seat portion 30 is positioned towards the front of the runners 34, exposing the first seat portion 22. The upper surfaces of the first and second seat portions 22, 30 together define a seat surface for an operator, the main load bearing surface being that of the first seat portion 22, and the upper surface of the second seat portion 30 providing thigh support. The upper surfaces are contoured for comfort and safety. The second position provides a relatively reclined seating position for the operator, such that the steering wheel/control yoke 18 can be easily reached, and the operator's feet can sit on the control pedal arrangement 20. In this position, the steering wheel/control yoke 18 is relatively close to the front edge of the seat 10, there being little space in which an operator could stand to move into or out of the crew compartment.

In use, starting with the seat in the first position (Figure 1), the operator enters the crew compartment and sits on the upper surface of the second seat portion 30. The operator then slides the second seat portion 30 forward along the runners 34 until it reaches the second position (Figure 2) and then moves back to sit on the first seat portion 22 and rest against the seat back 28. This procedure is reversed to leave the crew compartment.

It will be appreciated that various changes and modifications can be made to the system. The seat can include contoured cushioning, both on the seat portions and back, and in peripheral areas. Locking mechanisms can be provided to hold the seat portions in the first and second positions. Safety belts can be provided for further security.

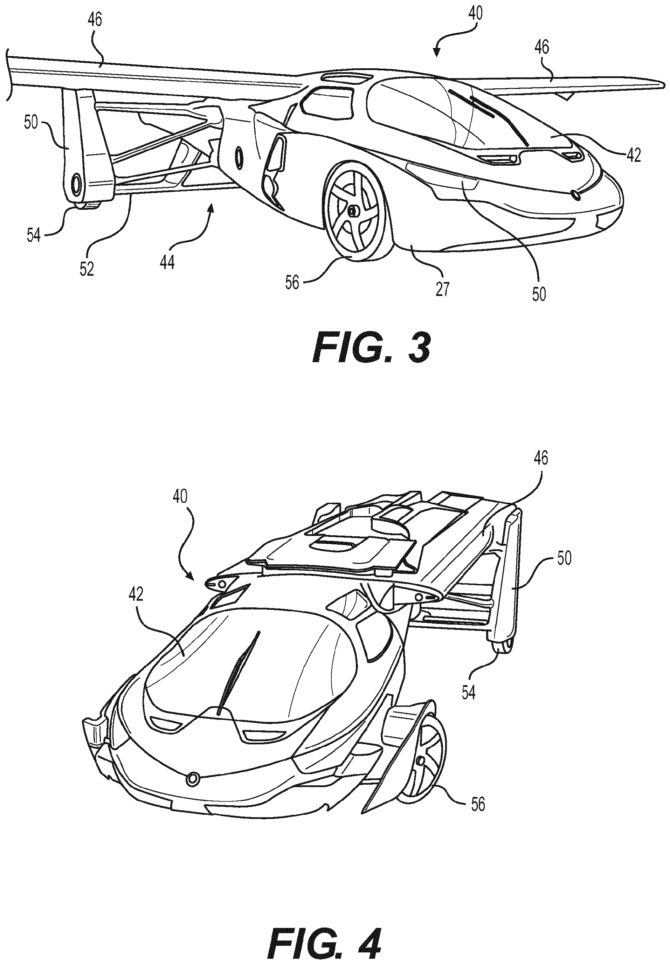

The system is particularly useful for a convertible vehicle for road and air use, often called a flying car. Referring to Figures 3 and 4, an aircraft comprising a convertible vehicle (a flying car) is shown, in a flight configuration (Figure 3) and a road use configuration (Figure 4). The flying car comprises a body structure 40 providing a crew compartment 42 and housing a motor (not shown) and propeller shaft (not shown) that extends from the motor to the rear 44 of the body structure 40, where the propeller is mounted as is described below. Wings 46 for providing lift and control (via ailerons, not shown) are mounted at the top of the body 40 immediately behind the crew compartment 42. The wings 46 can be moved between an extended position for flight use (Figure 3), and a folded position for road use (Figure 4). In the folded position, the wings lie along the top of the body 40, the long axis of the wings lying substantially parallel to the long axis of the body 40.

A tail structure 48 is located at the rear of the body 40, and includes vertical control surfaces 50 (fins and rudders), and horizontal control surfaces 52 (tail planes and elevators). Rear wheels 54 are provided at the lower ends of the fins 50.

Front wheels 56 are mounted on the body structure 40. The front wheels are both steerable and driven. In addition, the front wheels 56 can be moved between a retracted position (Figure 3) in which they are positioned close to the body to reduce drag in flight, and an open position (Figure 4) in which they are positioned for improved traction and control for road use.

Further changes may be made while remaining within the scope of the claimed invention.

## Claims

1. A seating system for a vehicle, comprising:
first and second seat portions, each providing upper load-bearing surfaces;
the first seat portion including a mounting structure for connection to a vehicle body; and
the second seat portion including a mounting structure allowing movement with respect to the first seat portion between first and second positions;
wherein:
in the first position, the second seat portion overlies at least part of the upper load-bearing surface of the first set portion; and
in the second position, the first and second seat portions are in a substantially side-by-side arrangement such that the respective upper load-bearing surfaces define a seat support surface.

2. A seating system as claimed in claim 1, wherein the first seat portion comprises a first seat pad providing the upper load-bearing surface, and the mounting structure of the first seat portion allows the first seat portion to be mounted on the vehicle body in a substantially fixed relationship.

3. A seating system as claimed in claim 1 or 2, wherein the second seat portion comprises a second seat pad providing the upper load-bearing surface, and the mounting structure of the second seat portion comprises rails on which the pad is mounted so as to be slideable relative to the first seat portion between the first and second positions.

4. A seating system as claimed in claim 3, wherein the rails are configured to be mounted on the vehicle body.

5. A seating system as claimed in any preceding claim, further comprising a seat back portion providing a substantially vertical support surface, and including a mounting structure for connection to a vehicle body.

6. A seating system as claimed in claim 5, wherein the seat back portion extends from a rear edge of the first seat portion, and the second seat portion is substantially aligned with a front edge of the first seat portion when in the second position.

7. A seating system as claimed in any preceding claim, wherein, when in the second position, the load bearing surface of the second seat portion is higher than the load bearing surface of the first seat portion.

8. A seating system as claimed in claim 7, wherein the load bearing surface of the second seat portion is configured in the second position as a thigh support for a user when seated on the seat support surface.

9. A vehicle, comprising:
a body defining a seating position for a user and including controls for operation by a user when seated in the seating position; and
a seating system as claimed in any preceding claim;
wherein the second seat portion is closer to the controls when in the second position than when in the first position.

10. A vehicle as claimed in claim 9, that is configurable for both road and air use, the controls being configurable according to the configuration of the vehicle.

11. A vehicle as claimed in claim 9 or 10, wherein the seating system and the controls are positioned such that, when the second seat portion is in the first position, the front edge of the second seat portion and the controls are separated by a space sufficient for a user to stand therebetween.

12. A method of using a vehicle as claimed in any of claims 9, 10, or 11, comprising:
configuring the first and second seat portions into the first position;
seating an operator on the load bearing surface of the second seat portion;
moving the second seat portion to the second position; and
moving the operator so as to be supported by the seat support surface defined by the first and second seat portions.
